**Europäisches Patentamt**

**(19) European Patent Office**

**Office européen des brevets**

(11) Publication number : **0 334 351 B1**

(12) **EUROPEAN PATENT SPECIFICATION**

(45) Date of publication of patent specification :
02.08.95 Bulletin 95/31

(51) Int. Cl.⁶ : **H04N 9/64, H04N 5/45**

(21) Application number : **89105238.3**

(22) Date of filing : **23.03.89**

(54) **Video signal processing circuit and an insertion circuit utilized therein.**

(30) Priority : **25.03.88 JP 72400/88**

(43) Date of publication of application :
**27.09.89 Bulletin 89/39**

(45) Publication of the grant of the patent :
**02.08.95 Bulletin 95/31**

(84) Designated Contracting States :
**DE FR GB**

(56) References cited :
**US-A- 4 663 668**

(56) References cited :
**PATENT ABSTRACTS OF JAPAN vol. 13, no. 86 (E-720)(3434) February 28, 1989 & JP-A-63 262 985**
**PATENT ABSTRACTS OF JAPAN vol. 12, no. 162 (E-609)(3009) May 17, 1988 & JP-A-62272678**

(73) Proprietor : **SANYO ELECTRIC CO., LTD.**
**18, Keihanhondori 2-chome**
**Moriguchi-shi Osaka-fu (JP)**

(72) Inventor : **Nagano, Yasuyuki**
**5-24 Oono 1-chome**
**Daito-shi Osaka-fu (JP)**

(74) Representative : **Glawe, Delfs, Moll & Partner**
**Patentanwälte**
**Postfach 26 01 62**
**D-80058 München (DE)**

## Description

BACKGROUND OF THE INVENTION

Field of the Invention

The present invention relates generally to video signal processing circuits and particularly to a video signal processing circuit and an insertion circuit utilized therein, for simultaneously displaying two pictures on a screen of a television set or the like based on a plurality of video signals modulated according to different chroma signal modulation systems. The present invention has a particular applicability in regions where video signals according to PAL and SECAM systems can be obtained simultaneously.

Description of the Background Art

Generally known modulation systems of chroma signals for a television set include an NTSC system, a phase alternation by line (referred to hereinafter PAL) system and a sequentiel couleur à mémoire (referred to hereinafter as SECAM) system. The PAL and SECAM systems are utilized particularly in European countries and video signals according to the two modulation systems can be received in many regions of such countries. In general, a modulation system of a chroma signal applicable to a television set is determined in advance and a desired picture cannot be obtained from a chroma signal modulated according to a different modulation system.

Recently, there have been developed techniques for displaying simultaneously two pictures obtained from two video signals onto areas of one screen of a television set. One of such techniques is a circuit for performing the so-called picture-in-picture function, which is disclosed for example in Japanese Patent Publication No. 37913/1984 or a Technical Journal "Television Technology" (pp. 19-25) published by Densi Gijutsu Shuppan Co. Ltd., February, 1988. Such circuits for the picture-in-picture function are widely known as the circuits applicable to video tape recorders and television sets.

Such prior art documents disclose a circuit for processing a video signal of the NTSC system to perform the picture-in-picture function and this technique is relatively easy. Since two video signals are based on the common NTSC system, it is easy to perform signal processing for representing two pictures simultaneously on one screen.

However, for example in European countries, there are regions where both of the PAL system and the SECAM system are applied, and it is difficult in such regions to obtain pictures of good quality processed by the picture-in-picture function, from the two video signals obtained by those two modulation systems.

An insertion circuit for obtaining a picture from two video signals is used in order to represent two pictures in two areas on the screen of a television set based on the two video signals. In the insertion circuit, two video signals are selected alternately by switching operation in response to a signal obtained based on a synchronizing signal of an inserted video signal. Comparing the two video signals, those signals have in general different pedestal DC levels and accordingly it is necessary to set the pedestal DC levels of those signals to common levels. In order to meet such necessity, a conventional insertion circuit includes a clamp circuit at a preceding stage of the insertion means.

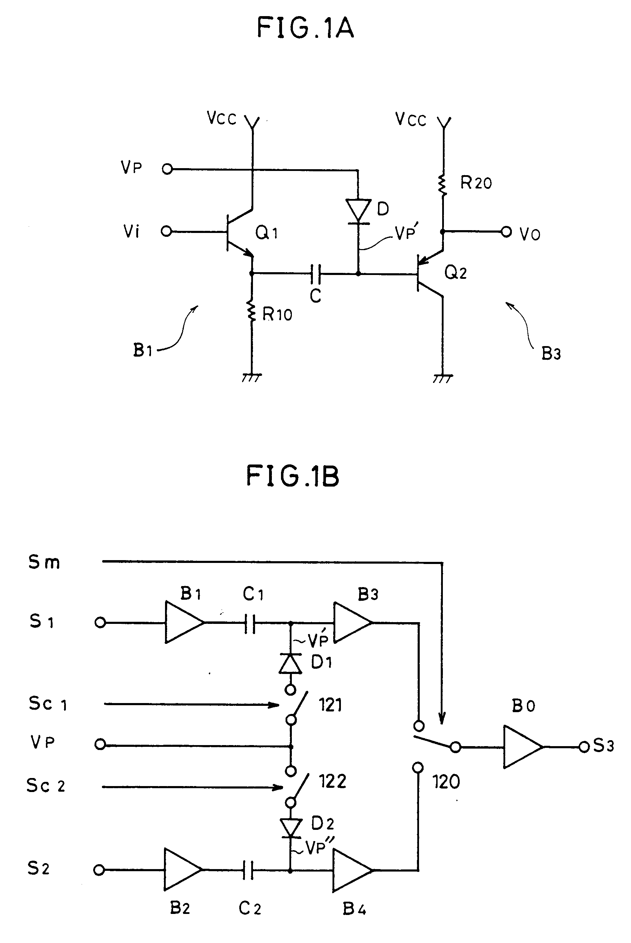

Fig. 1A is a diagram showing a conventional fundamental clamp circuit. Referring to Fig. 1A, the clamp circuit includes an input buffer B1 and an output buffer B3 cascaded in two stages through a capacitor C. The output buffer B3 is connected to receive a DC voltage Vp at its input through a diode D. The input buffer B1 includes an npn transistor Q1 and a resistor R10 connected in series between a power supply Vcc and ground. The output buffer B3 includes a resistor R20 and a pnp transistor Q2 connected in series between the power supply Vcc and the ground. The input buffer B1 has a low output impedance, while the output buffer B3 has a high input impedance.

In operation, an input signal Vi is applied to the base of the transistor Q1. The capacitor C applies a signal obtained by removing a DC voltage component from an output signal of the buffer B1 to the base of the transistor Q2. At the same time, the DC voltage Vp is applied to the base of the transistor Q2 through the diode D. In consequence, the lowest part of an output signal Vo from the output buffer B3, i.e., a DC voltage at the leading edge of the synchronizing signal can be maintained at the level of the DC voltage $Vp'$ ($Vp-V_D$) where $V_D$ is an anode-cathode voltage (about 0.6V) of the diode.

Fig. 1B is a diagram of a conventional insertion circuit for inserting two video signals. Referring to Fig. 1B, the insertion circuit comprises a first clamp circuit for processing a first video signal S1, a second clamp circuit for processing a second video signal S2, an analog switch 120 for inserting signals outputted from the first and second clamp circuits, and an output buffer BO. The first clamp circuit includes two buffers B1 and B3, a capacitor C1 connected therebetween, a diode D1 connected to an input of the buffer B3, and a switching element 121. Similarly, the second clamp circuit comprises two buffers B2 and B4, a capacitor C2, a diode D2 and a switching element 122. The buffer B3 is connected to receive the DC voltage Vp at its input through the diode D1 and the switching element 121. The buffer B4 is connected to receive the DC voltage Vp at its input through the switching element 122 and the diode D2. The buffers B1 and B2 have low output impedances while the buffers B3 on B4 have high input impedances.

In operation, the first and second video signals S1 and S2 are applied to the buffers B1 and B2, respectively. DC voltage components are removed from the output signals of the buffers B1 and B2 by means of the capacitors C1 and C2, respectively. The DC voltage Vp' (Vp-$V_D$) is applied through the switching element 121 and the diode D1, so that the capacitor C1 is charged. Similarly, the DC voltage Vp is applied through the switching element 122 and the diode D2, so that the capacitor C2 is charged. Since the buffers B3 and B4 have high input impedances, DC voltage levels of the pedestals of the output signals from the buffers B3 and B4 are equal. The analog switch 120 formed by a CMOS transistor carries out switching operation in response to a control signal Sm externally applied for insertion. As a result, a synthesized video signal S3 is obtained through the output buffer BO.

In the above described insertion circuit, it is necessary to carry out a large number of impedance conversions and, accordingly, the number of components needs to be increased. In addition, the buffers B3 and B4 are particularly affected by changes of an ambient temperature, causing the operation of the insertion circuit to be unstable.

## SUMMARY OF THE INVENTION

A principle object of the present invention is to obtain a synthesized composite video signal of a high quality in a video signal processing circuit for supplying the synthesized composite video signal for representing a plurality of pictures simultaneously on the same screen from a plurality of video signals modulated by different chroma signal modulation systems.

Another object of the present invention is to remove noise contained in a synthesized composite video signal in a video signal processing circuit for supplying the synthesized composite video signal for representing a plurality of pictures simultaneously on the same screen from a plurality of video signals modulated by different or same chroma signal modulation systems.

Still another object of the present invention is to simplify a construction of a video signal processing circuit for supplying a composite video signal for representing two pictures simultaneously on the same screen from two video signals modulated by different modulation systems.

These objects are achieved by a video signal processing circuit according to claim 1. The dependent claims 2 to 6 are related to different embodiments of the invention.

In operation, since the signal for the picture display means is obtained by insertion of the plurality of color difference signals in the insertion circuit, it becomes possible to prevent switching noise from being produced in the modulated signal by the insertion.

According to a preferred embodiment, the video signal processing circuit further includes a modulation circuit for modulating the inserted color difference signal outputted from the insertion circuit to a modulated chroma signal. Since the modulation circuit modulates the already inserted color difference signal in this video signal processing circuit, the number of modulation circuits can be reduced.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1A is a circuit diagram showing a conventional fundamental clamp circuit.

Fig. 1B is a circuit diagram of a conventional insertion circuit for inserting two video signals.

Fig. 2 is a schematic diagram showing an example to which a video signal processing circuit according to the present invention is applied.

Figs. 3A and 3C are schematic diagrams showing typical three cases as to relations of systems of an input video signal, a picture displayed and a television set.

Figs. 4A to 4C are circuit diagrams showing a video signal processing circuits which serve as a basis for understanding of the present invention.

Fig. 5 is a circuit diagram of a video signal processing circuit according to an embodiment of the present invention.

Figs. 6A to 6C are circuit diagrams for explaining operation of the video signal processing circuit shown in Fig. 5.

Figs. 7A and 7B are circuit diagrams showing examples of an insertion circuit utilized in the video signal processing circuit shown in Fig. 5.

DESCRIPTION OF THE PREFERRED EMBODIMENTS

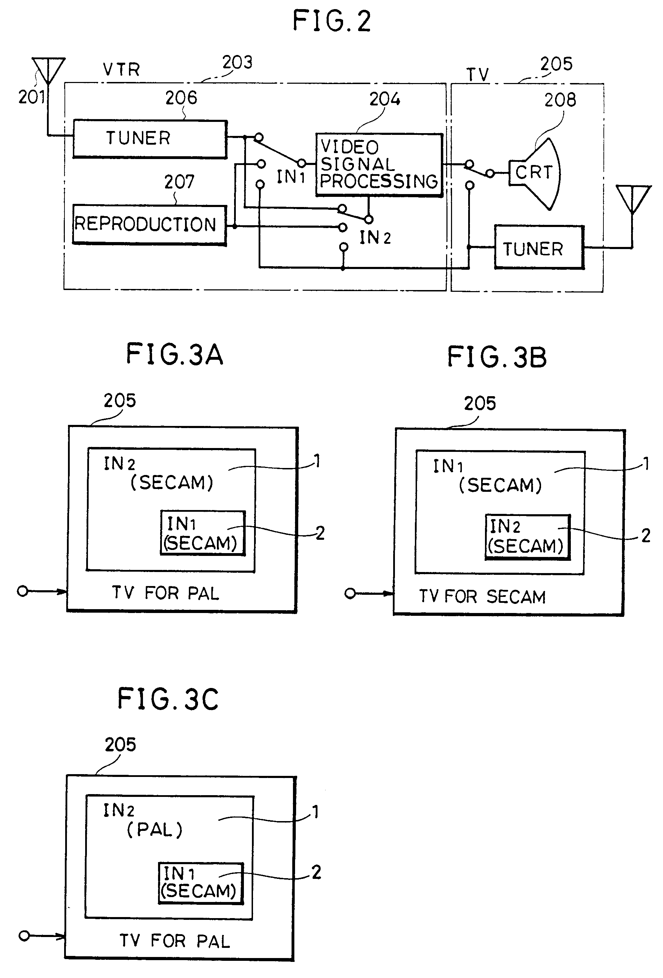

Fig. 2 is a schematic diagram showing an example to which a video signal processing circuit according to the present invention is applied. Referring to Fig. 2, the video signal processing circuit 204 as well as a tuner circuit 206 and a reproduction circuit 207 is provided in a video tape recorder (hereinafter referred to as VTR) 203. A television set 205 is connected to receive a process composite video signal from the circuit 204. The television set 205 has a screen on a CRT 208 including an area for representing a main picture (hereinafter referred to as a main screen) and an area for representing a sub picture (hereinafter referred to as a sub screen).

As described previously, there are regions where video signals of the PAL system and the SECAM system can be obtained simultaneously and, in such regions, it is needed to display two pictures on the main screen and the sub screen of the television set 205 by processing two video signals by means of the video signal processing circuit 204 as shown in Fig. 2.

Figs. 3A to 3C are illustrations showing typical three cases of relations among a system of an inputted video signal, a system of a video signal represented on screen and a system of a signal received by a television set. In the case of Fig. 3A, a television set of the PAL system is used. Video signals of the SECAM system are applied to the input terminals IN1 and IN2 of the video signal processing circuit 204. The picture on the main screen 1 is supplied by the video signal applied to the terminal IN2 and the picture on the sub screen 2 is supplied by the video signal applied to the terminal IN1.

In the case of Fig. 3B, a television set of the SECAM system is used. In this case as well, video signals according to the SECAM system are applied to the terminals IN1 and IN2. The picture on the main screen 1 is supplied by the video signal applied to the terminal IN1 and the picture on the sub screen 2 is supplied by the video signal applied to the terminal IN2.

In the case of Fig. 3C, a television set of the PAL system is used. A video signal of the SECAM system is applied to the terminal IN1 and a video signal of the PAL system is applied to the terminal IN2. The picture on the main screen 1 is supplied by the video signal applied to the terminal IN2 and the picture on the sub screen 2 is supplied by the video signal applied to the terminal IN1.

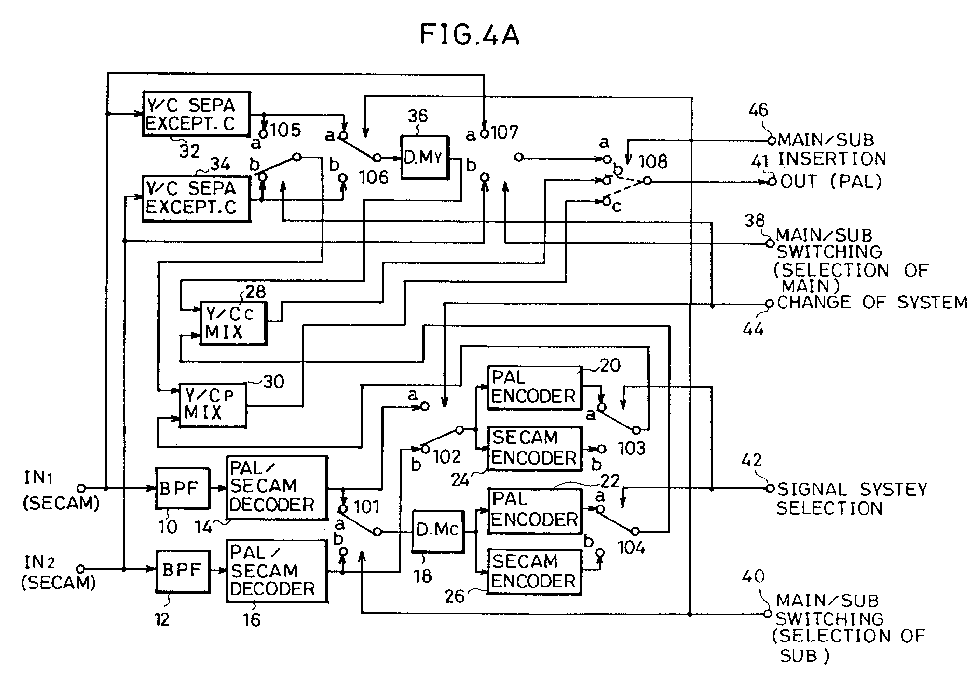

Figs. 4A to 4C are circuit diagrams showing video signal processing circuits which serve as basis for understanding of the present invention. Figs. 4A to 4C correspond to the cases shown in Figs. 3A to Fig. 3C, respectively. Thus, connection of the switching circuit in the video signal processing circuit is controlled in each case.

Referring to Fig. 4A, the video signal processing circuit comprises a terminal IN1 to which a first video signal is applied, a terminal IN2 to which a second video signal is applied, a color signal processing portion, a luminance signal processing portion, and a mixing portion for mixing the luminance signal and the color signal. The color signal processing portion comprises bandpass filters 10 and 12 for obtaining modulated chroma signals from the video signals, PAL/SECAM decoders 14 and 16 for outputting a color difference signal by demodulation of the modulated chroma signals, a PAL encoder 20 and an SECAM encoder 24 for obtaining a modulated chroma signal by modulation of the color difference signal for the main screen, a digital processing circuit 18 for processing the color difference signal for the sub screen, and a PAL encoder 22 and an SECAM encoder 26 for obtaining a modulated chroma signal by modulation of the color difference signal for the sub screen.

The luminance signal processing portion comprises luminance signal sampling circuits 32 and 34 for obtaining a luminance signal from an externally applied video signal, and a digital processing circuit 36 for digitally processing the luminance signal for the sub screen. The mixing portion comprises a mixing circuit 28 for mixing the modulated chroma signal and the luminance signal for the sub screen, a mixing circuit 30 for mixing the modulated chroma signal and the luminance signal for the main screen, and a switching circuit 108 for synthesizing the mixed signals from those two circuits.

This video signal processing circuit is provided with switching circuits 101 to 107, the operation of which is externally controlled dependent on the conditions of the use as in the cases of Figs. 3A to 3C for example. Externally applied control signals are supplied to these circuits through external control terminals 38, 40, 42, 44 and 46. The control signals applied to the respective terminals, the switching circuits controlled by those signals, and the functions thereof are as shown in table 1.

Table 1

| Terminal | Switching circuit | Signal | Function |
|---|---|---|---|
| 38 | 107 | main/sub sw. (main selection) | The user determines either IN1 or IN2 to be main. |
| 40 | 101 106 | main/sub sw. (sub selection) | Select the other one than the main signal selected by the user. If IN1 is main, sw circuits 101 & 106 select b. |
| 42 | 103 104 | signal system selection | The user selects the system dependent on whether TV connected is PAL or SECAM. |
| 44 | 102 105 | system selection | Convert the system of the main screen signal. |
| 46 | 108 | main-sub insertion | The main screen sw is mainly selected. At the time of inserting the sub screen, switching is made to the sub screen terminal. This switching involves different combinations dependent on TV connected, the input terminal of main signal and the input signal. |

Now, the operation will be described.

As described above, Fig. 4A corresponds to the case of Fig. 3A. Video signals of the SECAM system are applied to the terminals IN1 and IN2. The output terminal 41 is connected with a television set of the PAL system. A modulated chroma signal is obtained by the bandpass filter from the video signal applies to the terminal IN1. On the other hand, a modulated chroma signal is obtained by the filter 12 from the video signal applied to the terminal IN2. Each of the decoders 14 and 16 includes a detection circuit for detecting the system of the applied video signal, a PAL demodulating circuit, and an SECAM demodulating circuit (not shown). In each of the decoders 14 and 16, the SECAM demodulating circuit operates and a color difference signal is outputted. The color difference signal for the sub screen outputted from the decoder 14 is applied to the digital processing circuit 18 through the switching circuit 101.

The digital processing circuit 18 includes an A/D converter, a memory circuit for storing a data signal, and a D/A converter (not shown). In this digital processing circuit, a signal corresponding to 1/3 of the total color difference signal is selected so that it is adapted for the sub screen. Thus, the color signal is thinned out vertically and band-limited and compressed horizontally. The thinned-out and compressed color signal is modulated by the PAL encoder 22 and the modulated chroma signal is applied to the mixing circuit 28. On the other hand, the color difference signal for the main screen outputted from the decoder 16 is applied to the PAL encoder 20 through the switching circuit 102. The encoder 20 modulates the color difference signal and the modulated chroma signal is applied to the mixing circuit 30.

In the meantime, luminance signals are obtained from the two video signals by the luminance signal sampling circuits 32 and 34. The luminance signal for the sub screen is applied to the digital processing circuit 36 through the switching circuit 106. The digital processing circuit 36 has the same circuit configuration as that of the digital processing circuit 18. Also in this processing circuit 36, a luminance signal corresponding to 1/3 of the total luminance signal in the vertical and horizontal directions is selected. Thus, thinning out and compression of the luminance signal are effected by digital processing. The thinned-out and compressed luminance signal is applied to the mixing circuit 28. The luminance signal for the main screen is applied to the mixing circuit 30 from the sampling circuit 34 through the switching circuit 105.

The mixing circuit 30 mixes the modulated chroma signal and the luminance signal for the main screen. The mixing circuit 28 mixes the modulated chroma signal and the luminance signal for the sub screen. The mixed signals obtained from those two circuits are inserted by the analog switching circuit 108 and a synthesized composite video signal for simultaneous display of the main and sub screens is outputted through the output terminal 41.

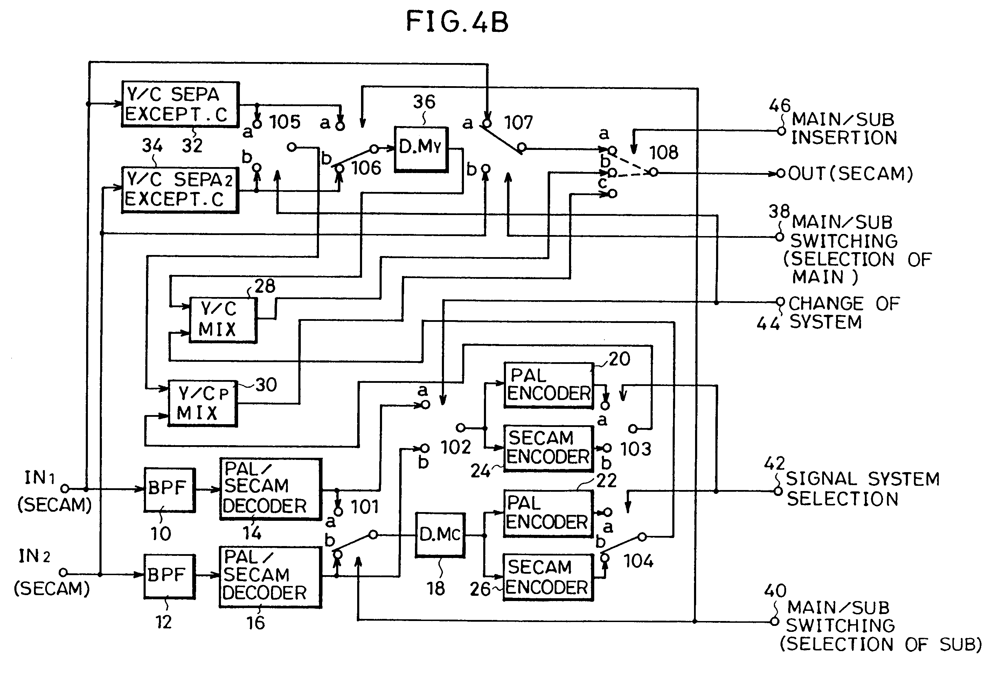

In the case of Fig. 4B, since the modulating system of the video signal for forming the main screen and the television system are the same SECAM system, video signal processing for the main screen can be omitted. More specifically, the video signal applied to the input terminal IN1 is directly applied to the analog switch circuit 108 through the switching circuit 107. On the other hand, video signal processing for the sub screen is carried out in the same manner as described above. More specifically, the color difference signal for the sub screen is outputted from the decoder 16 and it is applied to the digital processing circuit 18 through the switching circuit 101. The color difference signal thinned out and compressed by the processing circuit 18 is modulated by the SECAM encoder 26 and then the modulated chroma signal is applied to the mixing circuit 28. The luminance signal thinned out and compressed for the sub screen by the digital processing circuit 36 is also applied to the mixing circuit 28. A signal obtained by mixing in the mixing circuit 28 is applied to the analog switching circuit 108, where a synthesized composite video signal is formed by the insertion.

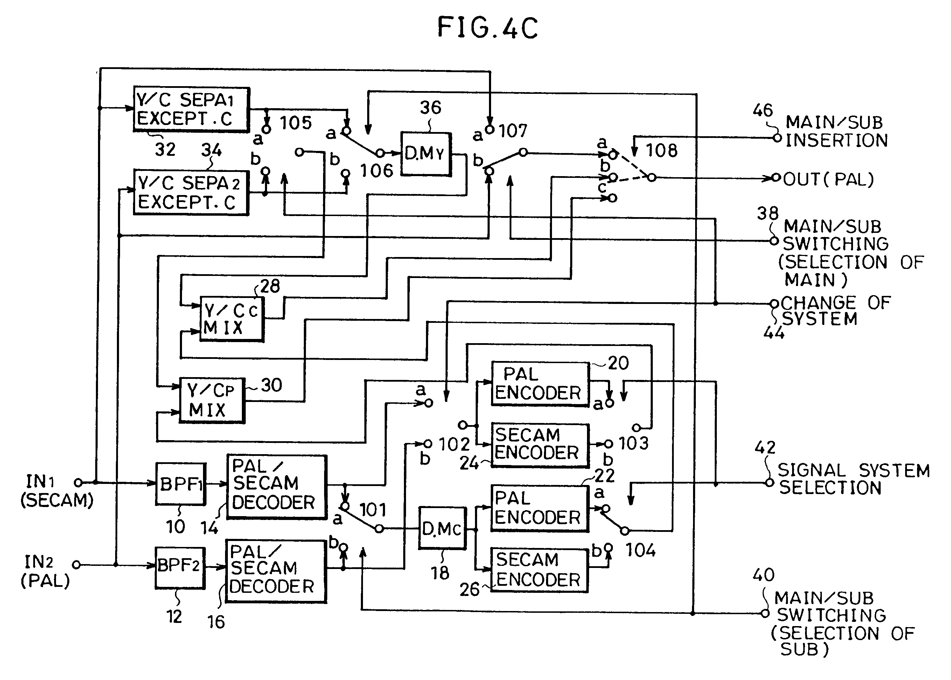

In the case of Fig. 4C, the video signal system for the main screen and the television system are the same PAL system and accordingly the same processing as that in the case of Fig. 4B is carried out. More specifically, the video signal for the main screen applied to the terminal IN is applied directly to the switching circuit 108 through the switching circuit 107. A signal obtained by mixing in the mixing circuit 28 to form the sub screen is applied to the switching circuit 108. In the same manner as described above, the switching circuit 108 outputs a synthesized composite video signal by insertion operation.

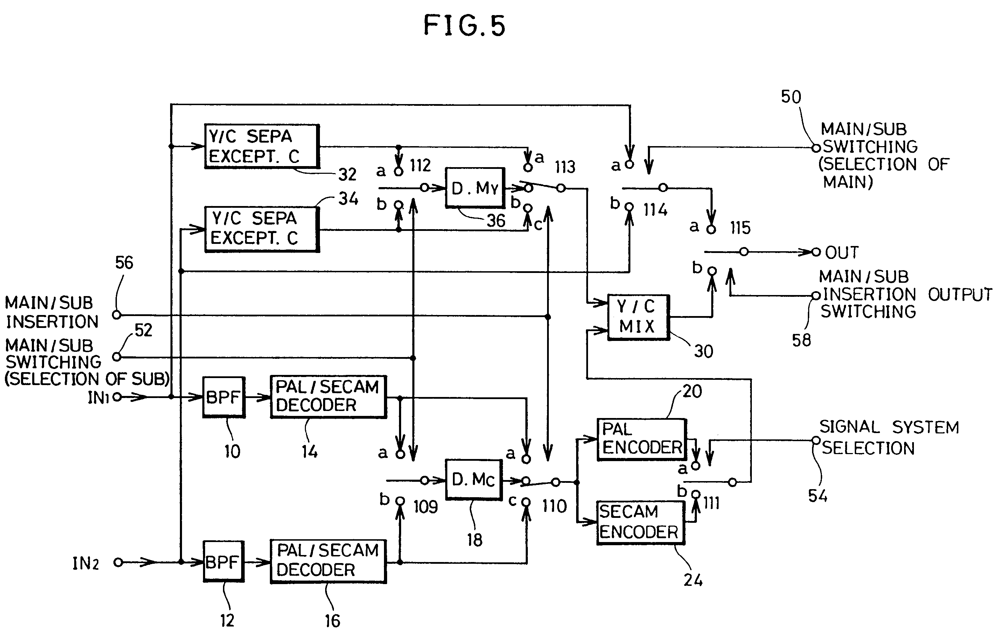

Fig. 5 is a circuit diagram showing a video signal processing circuit according to an embodiment of the present invention. Referring to Fig. 5, different points compared with the circuit shown in Figs. 4A to 4C are as follows. The color signal processing portion includes an analog switching circuit 110 for inserting a color difference signal into the outputs of the decoders 14 and 16. An output of the digital processing circuit 18 for supplying a thinned-out and compressed color difference signal for the sub screen is connected to the switching circuit 110. The output of the analog switching circuit 110 is connected with a PAL encoder 20 and an SECAM encoder 24. Outputs of the encoders 20 and 24 are connected to the mixing circuit 30 for mixing the modulated chroma signal and the luminance signal through the switching circuit 111. Similarly, the luminance signal processing portion includes an analog switching circuit 113 for inserting the luminance signal for the main and sub screens into the outputs of the luminance signal separating circuits 32 and 34. An output of the digital processing circuit 36 for thinning out and compressing a luminance signal for the sub screen is connected to an input of the analog switching circuit 113. An output of the switching circuit 113 is connected to the mixing circuit 30.

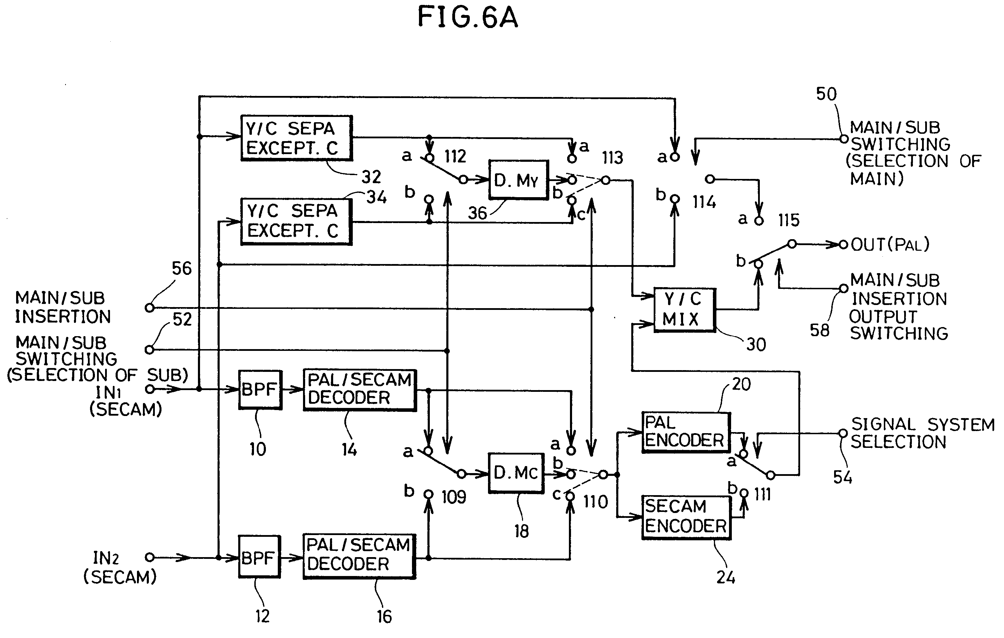

Figs. 6A to 6C are circuit diagrams for explaining operation of the video signal processing circuit shown in Fig. 5. Figs. 6A to 6C correspond to the cases shown in Figs. 3A to 3C.

Now, operations in the respective cases will be described. The control signals applied to the respective terminals, the switching circuits controlled by those signals and the functions thereof are as shown in table 2.

Table 2

| Terminal | Switching circuit | Signal | Function |
|---|---|---|---|
| 50 | 114 | main/sub sw. (main selection) | The user determines either IN1 or IN2 to be main. |
| 52 | 109 | main/sub sw. (sub selection) | Select the other one than the main signal selected by the user. |
| 54 | 111 112 | signal system selection | The user selects the system dependent on whether TV connected is PAL or SECAM. a for PAL and b for SECAM. |
| 56 | 110 113 | main-sub insertion | The main screen sw is mainly selected. Switching to the sub screen terminal at the time of inserting the sub screen. This switching involves different combinations dependent on TV connected, the main signal input terminal and the input signal. |
| 58 | 115 | main-sub insertion output sw. | The main screen sw terminal (a) is mainly selected. Switching to the terminal (b) at the time of inserting the sub screen. This applies to the case of PAL main input and PAL output. In other cases, the terminal (b) is selected. |

In the case of Fig. 6A, a color difference signal for the sub screen and a color difference signal for the main screen are obtained in the decoders 14 and 16, respectively. The color difference signal for the sub screen is applied to the digital processing circuit 18 through the switching circuit 109. The digital processing circuit 18 outputs a color difference signal thinned out and compressed for the sub screen as described above and applies it to the analog switching circuit 110. On the other hand, the color difference signal for the main screen is also applied to the switching circuit 110. The analog switching circuit 110 effects insertion for the main and sub screens by switching operation. A synthesized color difference signal obtained by the insertion is modulated by the encoder 20 and a modulated chroma signal is applied to the mixing circuit. On the other hand, a luminance signal for the sub screen and that for the main screen are obtained by the luminance signal separating circuits 32 and 34, respectively. The luminance signal for the sub screen is applied to the digital processing circuit 36 through the switching circuit 112. A color difference signal thinned out and compressed for the sub screen in the digital processing circuit 36 is applied to the analog switching circuit 113. The luminance signal for the main screen is also applied to the analog switching circuit 113. In the analog switching circuit 113, insertion for the main and sub screens is effected by switching operation and a luminance signal obtained by the insertion is applied to the mixing circuit 30. The mixing circuit 30 mixes the modulated chroma signal and the luminance signal and a synthesized composite video signal is outputted therefrom through the switching circuit 115 and the output terminal.

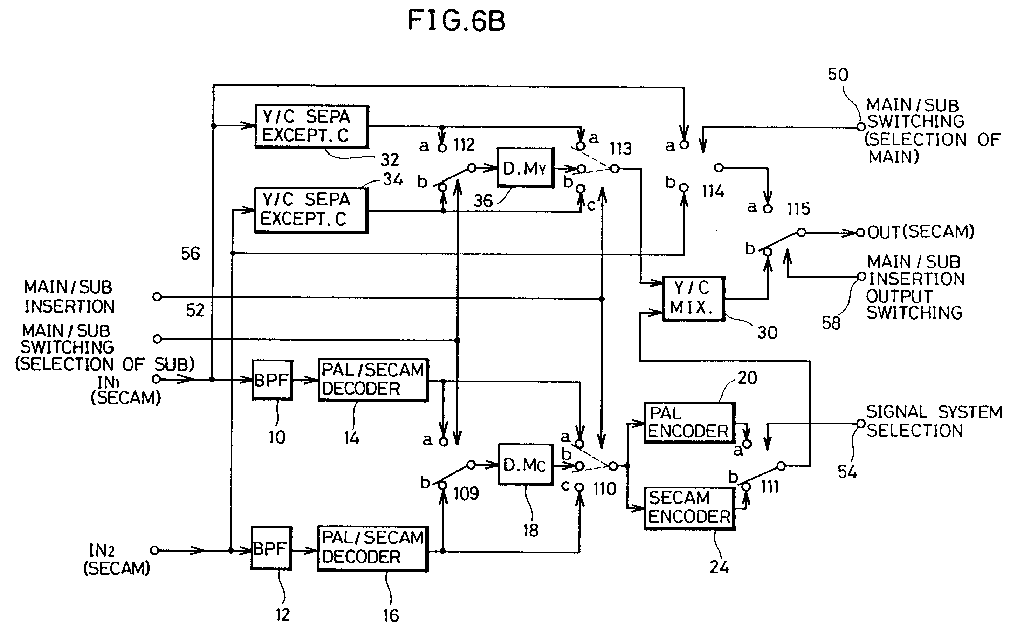

In the case of Fig. 6B, operation similar to that in the case of Fig. 6A is carried out. More specifically, a color difference signal for the sub screen is obtained by means of the filter 12 and the decoder 16 from the video signal for the sub screen applied to the terminal IN2. The color difference signal is applied to the digital processing circuit 18 through the switching circuit 109. On the other hand, a color difference signal for the main screen is obtained through the filter 10 and the decoder 14 and it is applied to the analog switching circuit 110. The switching circuit 110 effects insertion for the main and sub screens. A synthesized color difference signal obtained by the insertion is applied to the SECAM encoder 24. A modulated chroma signal obtained by the modulation in the encoder 24 is applied to the mixing circuit 30 through the switching circuit 111. In this case also, the analog switching circuit 113 inserts the luminance signal thinned out and compressed for the sub screen by the digital processing circuit 36 into the luminance signal for the main screen obtained by the sampling circuit 32. A synthesized luminance signal obtained by the insertion is applied to the mixing circuit 30. The mixing circuit 30 mixes the modulated chroma signal and the luminance signal for the main and sub screens. A composite video signal obtained by the mixing circuit 30 is outputted through the switching circuit 115.

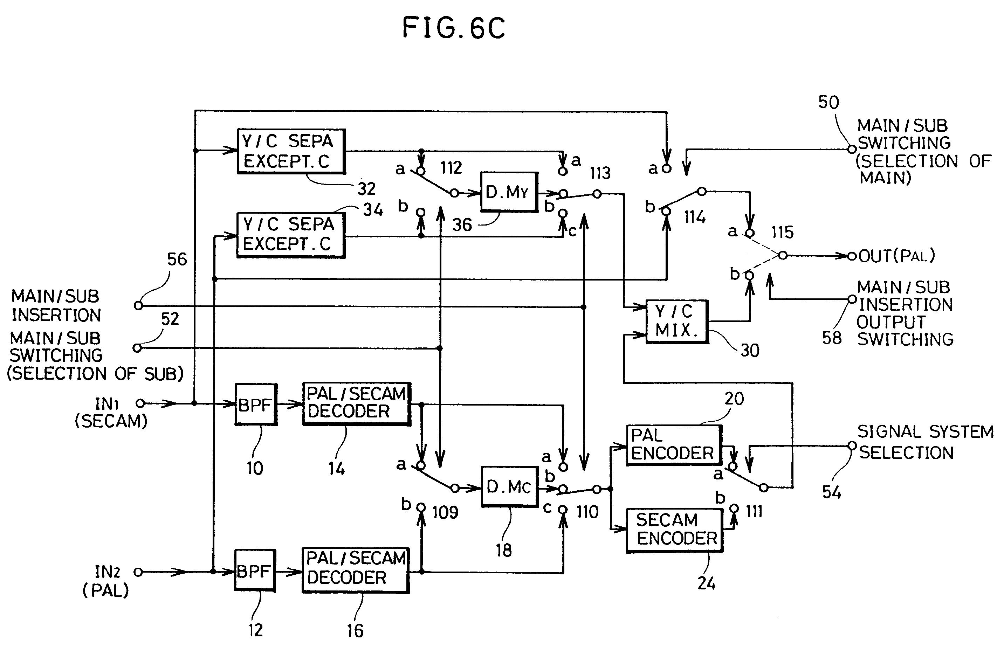

In the case of Fig. 6C, a color difference signal is obtained through the filter 10 and the decoder 14 from the video signal applied to the terminal IN1. The color difference signal is applied to the digital processing circuit 18 through the switching circuit 109. A color difference signal thinned out and compressed by the processing circuit 18 is applied to the PAL encoder 20 through the switching circuit 110. The encoder 20 modulates the color difference signal and outputs a modulated chroma signal to the mixing circuit 30. On the other hand, a luminance signal obtained by the sampling circuit 32 is applied to the digital processing circuit 36 through the switching circuit 112. A luminance signal thinned out and compressed by the processing circuit 36 is applied to the mixing circuit 30 through the switching circuit 113. The mixing circuit 30 mixes the modulated chroma signal and the luminance signal for the sub screen and a signal obtained by the mixing is applied to the analog switching circuit 115. On the other hand, the video signal for the main screen is directly applied to the analog switching circuit 115 through the switching circuit 114. The analog switching circuit 115 effects insertion for the main and sub screens and a synthesized composite video signal obtained by the insertion is outputted therefrom.

The above description was related to the operations of the video signal processing circuit shown in Fig. 5 for the respective cases shown in Figs. 3A to 3C. In the following, those operations will be summarized.

If the modulation system of the video signal selected for the main screen and the signal processing system of the television set are the same system, the analog switching circuit 115 effects insertion for the main and sub screens. In the case of using a modulated chroma signal by a quadrature amplitude modulation system such as the PAL system, a modulated chroma signal is obtained by the encoder 20 in response to a burst signal obtained from the video signal for the main screen. Accordingly, in the case of Fig. 6C, the switching circuit 115 effects insertion for the main and sub screens. In the case of the SECAM system, the modulated chroma signal is frequency-modulated and, accordingly, insertion is effected in the analog switching circuit 110 at the stage of the color difference signals at the time of insertion for the main and sub screens.

More specifically, in the video signal processing circuit shown in Fig. 4A, mixed signals obtained by the mixing circuits 28 and 30 are inserted by the analog switching circuit 108. In this insertion operation, generation of switching noises at the time of mixing cannot be prevented in the SECAM system because of the utilization of FM. On the other hand, as shown in Fig. 6A, no switching noise is produced at the stage of the color difference signals since insertion for the main and sub screens is effected in the analog switching circuit 110 and there is no discontinuous phase in an FM signal.

Furthermore, comparing the video signal processing circuit shown in Fig. 5 and the circuit shown in Fig. 4A, the number of PAL encoders and the number of SECAM encoders are reduced to halves of the numbers in the case of Fig. 4A. Thus, the circuit construction is simplified.

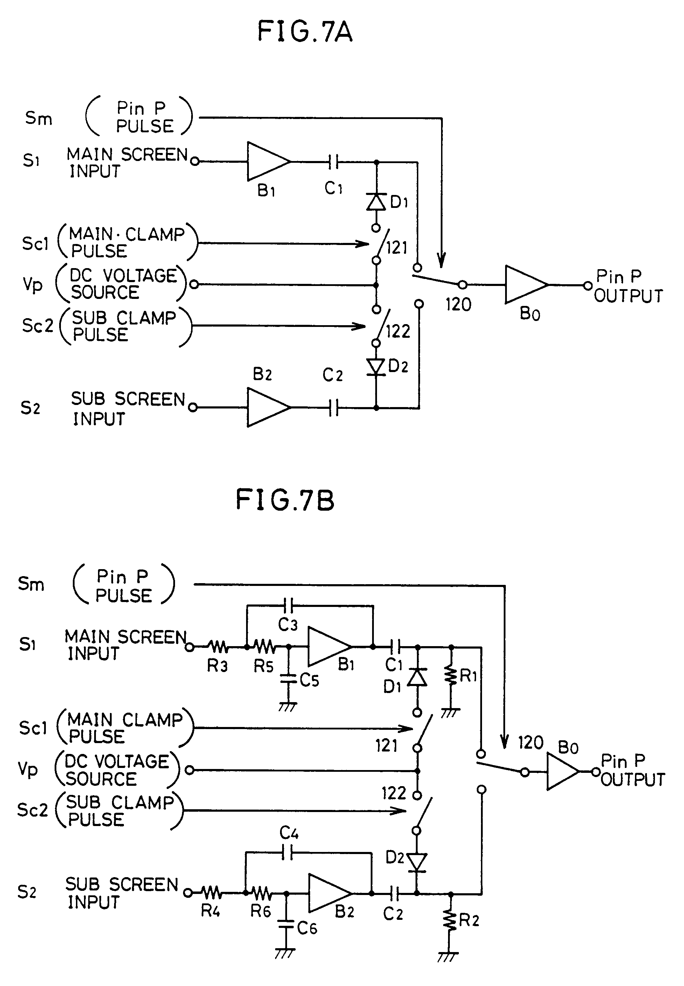

Fig. 7A is a circuit diagram showing an analog switching circuit for insertion to be used in the video signal processing circuit shown in Fig. 5. Referring to Fig. 7A, this circuit has different points as described below, compared with the conventional circuit shown in Fig. 1B. The insertion circuit shown in Fig. 7A does not have the buffers B3 and B4 shown in Fig. 1B. For the purpose of removing those two buffers, output impedances of the buffers B1 and B2 are set low so as to drive the switching circuit 120. The output buffer B0 has a sufficiently high input impedance so that it may not be influenced by the on resistance of the analog switching circuit 120.

In operation, a first video signal S1 is supplied to the buffer B1. A second video signal S2 is applied to the buffer B2. The capacitors C1 and C2 remove DC components from the respective video signals. A DC voltage Vp is applied through the switching circuits 121 and 122 and the diodes D1 and D2, so that the DC levels of the video signals, namely, DC voltage levels of the pedestals can be made equal. The first and second video signals having the equal levels are inserted in the analog switching circuit 120 formed by a CMOS device. A synthesized signal is outputted through the output buffer B0.

A picture-in-picture pulse signal Sm, a main screen clamp pulse signal Sc1 and a sub screen clamp pulse signal Sc2, applied externally to this insertion circuit, are obtained from a horizontal synchronizing signal of the video signal for the main screen. More specifically, the horizontal synchronizing signal for the main screen is delayed, whereby pulses synchronizing with the pedestals of the video signal for the main screen are obtained.

Fig. 7B is a circuit diagram showing another example of the analog switching circuit to be utilized in the video signal processing circuit shown in Fig. 5. The insertion circuit shown in Fig. 7B includes: a first active filter formed by resistors R3 and R5, capacitors C3 and C5, and a buffer B1; and a second active filter formed by resistors R4 and R6, capacitors C4 and C6, and a buffer B2. Those two active filters make it possible to remove harmonic noises caused by the digital processing and the decoding from the video signals. A discharging time constant for the clamp circuit is defined by the input impedances of the capacitors C1 and C2 and the output buffer B0. Inputs of the output buffer B0 are discharged alternately by selection operation of the analog switching circuit 120. Accordingly, resistors R1 and R2 having the values lower than the input impedance of the output buffer B0 are connected, whereby the discharging time constants of the two clamp circuits are made equal.

Since the buffers B3 and B4 shown in Fig. 1B are not provided in the insertion circuit shown in Figs. 7A and 7B, the circuit construction is simplified and the operation is not affected by ambient temperature changes.

## Claims

1. A video signal processing circuit (204) connectable to picture display means (205) having a screen for displaying a picture, said video signal processing circuit (204) supplying, to said picture display means, a composite video signal for displaying at least first and second pictures simultaneously on the screen of said picture display means (205), and said screen of said picture display means having a first screen area for displaying the first picture and a second screen area for displaying the second picture,

**characterized** by:

first extracting means (10) for receiving a video signal modulated by a first or second modulation system as an input and for extracting a color difference carrier modulated signal component from said video signal,

first demodulating means (14) for demodulating said color difference carrier modulated signal component obtained by said first extracting means (10) with a demodulating system corresponding to its modulating system and for supplying the demodulated signal as a first demodulation output,

second extracting means (12) for receiving a video signal modulated by said first or second modulation system as an input and for extracting a color difference carrier modulated signal component from said video signal,

second demodulating means (16) for demodulating said color difference carrier modulated signal component obtained by said second extracting means (12) with a demodulating system corresponding to its modulating system and for supplying the demodulated signal as a second demodulation output,

first converting means (18) selectively connected to said first or second demodulating means (14, 16) for compressing the demodulated output signal obtained from the connected demodulating means to convert the demodulated output signal to a color difference signal which can be displayed in said second screen area smaller than said first screen area whithin said first screen area on said screen of said picture display means (205),

first insertion means (110) for inserting an output signal of said converting means (18) into an output signal of the demodulating means which has not been selectively connected to said first converting means (18),

first luminance signal separating means (32) for receiving a video signal modulated by a first or second modulation system as an input and for extracting a luminance signal from the video signal modulated by its modulation system,

second luminance signal separating means (34) for receiving a video signal modulated by a first or second modulation system as an input and for extracting a luminance signal from the video signal modulated by its modulation system;

second converting means (36) selectively connected to said first or second luminance signal separating means (32, 34) for compressing the luminance signal obtained from the connected separating means to convert the luminance signal to a luminance signal which can be displayed in said second screen area smaller than said first screen area within said first screen area on said screen of said picture display means,

second insertion means (113) for inserting an output signal of said second converting means (36) into an output signal of the separating means which has not been selectively connected to said second converting means (36),

modulation means (20, 24) connected to said first insertion means (110), for modulating an output signal synthesized by said first insertion means (110) to a modulated chroma signal, and

mixing means (30) for mixing said modulated chroma signal with the output signal of said second insertion means (113) in order to output said composite video signal.

2. A video signal processing circuit in accordance with claim 1, wherein
said first insertion means (110) comprises
a reference voltage source (Vp),
first level setting means (B1, C1, D1, 121) connected to said first converting means (18), for setting a pedestal level of said converted color difference signal to a reference voltage level,
second level setting means (B2, C2, D2, 122) connected to said demodulating means which has not been selectively connected to said first converting means (18), for setting a pedestal level of the color difference signal to a reference voltage level, and
switching means (120) connected to said first and second level setting means, for selectively outputting output signals from said first and second level setting means in response to a horizontal synchronizing signal included in said first or second video signal.

3. A video signal processing circuit in accordance with claim 1, wherein
either one of said first and second modulation systems includes either one of the PAL and SECAM systems and the other one of said first and second modulation systems includes the other one of the PAL and SECAM systems.

4. A video signal processing circuit in accordance with claim 1, wherein
said first and second extracting means (10, 12) are band pass filters each for selectively allow passage of a chroma signal component.

5. A video signal processing circuit in accordance with claim 2, wherein
said first level setting means includes a first clamp circuit, and said second level setting means includes a second clamp circuit.

## Patentansprüche

1. Schaltung zur Verarbeitung eines Videosignals (204), die mit einer Bildanzeigevorrichtung (205) mit einem Schirm zur Anzeige eines Bildes verbindbar ist, wobei die Schaltung zur Verarbeitung eines Videosignals (204) der Bildanzeigevorrichtung ein zusammengesetztes Videosignal zur gleichzeitigen Anzeige von wenigstens einem ersten und einem zweiten Bild auf dem Schirm der Bildanzeigevorrichtung (205) zuführt, und wobei der Schirm der Bildanzeigevorrichtung einen ersten Bereich des Schirms zur Anzeige des ersten Bildes und einen zweiten Bereich des Schirms zur Anzeige des zweiten Bildes hat,
**gekennzeichnet** durch
eine erste Entnahmevorrichtung (10), um als eine Eingabe ein Videosignal von einem ersten oder zweiten Modulationssystem zu empfangen und eine trägermodulierte Farbdifferenz-Signalkomponente aus dem Videosignal zu entnehmen,
eine erste Demodulationsvorrichtung (14), um die von der ersten Entnahmevorrichtung (10) erhaltene trägermodulierte Farbdifferenz-Signalkomponente mit einem seinem Modulationssystem entsprechenden Demodulationssystem zu demodulieren und um das demodulierte Signal als erste Demodulationsausgabe zu liefern,
eine zweite Entnahmevorrichtung (12), um als eine Eingabe ein Videosignal von dem ersten oder zweiten Modulationssystem zu empfangen und um eine trägermodulierte Farbdifferenz-Signalkomponente aus dem Videosignal zu entnehmen,
eine zweite Demodulationsvorrichtung (16), um die von der zweiten Entnahmevorrichtung (12) erhaltene trägermodulierte Farbdifferenz-Signalkomponente mit einem ihrem Modulationssystem entsprechenden Demodulationssystem zu demodulieren und um das demodulierte Signal als eine zweite Demodulationsausgabe zu liefern,
eine erste Wandlervorrichtung (18), die wahlweise mit der ersten oder zweiten Demodulationsvorrichtung (14, 16) zur Kompression des von der verbundenen Demodulationsvorrichtung erhaltenen demodulierten Ausgabesignals verbunden wird, um das demodulierte Ausgabesignal in ein Farbdifferenzsignal umzuwandeln, das auf dem zweiten Bereich des Schirms - der kleiner als der erste Bereich des Schirms ist - innerhalb des ersten Bereichs des Schirms auf dem Bildschirm der Bildanzeigevorrichtung (205) anzuzeigen,
eine erste Einfügevorrichtung (110), um ein Ausgabesignal der Wandlervorrichtung (18) in ein Ausgabesignal der Demodulationsvorrichtung, die nicht wahlweise mit der ersten Wandlervorrichtung (18) verbunden wurde, einzufügen,

eine erste Luminanzsignal-Abtrennvorrichtung (32), um als eine Eingabe ein durch ein erstes oder zweites Modulationssystem moduliertes Videosignal zu empfangen und um ein Luminanzsignal aus dem von dem Modulationssystem modulierten Videosignal abzutrennen,

eine zweite Luminanzsignal-Abtrennvorrichtung (34), um als eine Eingabe ein durch ein erstes oder zweites Modulationssystem moduliertes Videosignal zu empfangen, und um ein Luminanzsignal von dem durch das Modulationssystem modulierte Videosignal abzutrennen;

eine zweite Wandlervorrichtung (36), die wahlweise zur Kompression des von der verbundenen Abtrennvorrichtung erhaltene Luminanzsignal verbunden ist, um das Luminanzsignal in ein Luminanzsignal umzuwandeln, welches in dem zweiten Bereich des Schirms - der kleiner als der erste Bereich des Schirms ist - innerhalb des ersten Bereichs des Schirms auf dem Schirm der Bildanzeigevorrichtung angezeigt werden kann,

eine zweite Einfügevorrichtung (113) zum Einfügen eines Ausgabesignals der zweiten Wandlervorrichtung (36) in ein Ausgabesignal der Abtrennvorrichtung, die nicht wahlweise mit der Wandlervorrichtung (36) verbunden wurde,

eine Modulationsvorrichtung (20,24), die mit der ersten Einfügevorrichtung (110) verbunden ist, um ein Ausgabesignal, welches von der ersten Einfügevorrichtung (110) erzeugt wurde, auf ein moduliertes Farbtonsignal zu modulieren, und

eine Mischervorrichtung (30) zum Mischen des modulierten Farbtonsignals mit dem Ausgabesignal der zweiten Einfügevorrichtung (113), um das zusammengesetzte Videosignal auszubilden.

2. Schaltung zur Verarbeitung eines Videosignals nach Anspruch 1, bei der
   die erste Einfügevorrichtung (110) umfaßt:
   eine Bezugsspannungsquelle (Vp),
   eine erste Pegelfestlegevorrichtung (B1,C1,D1,121), die mit der ersten Wandlervorrichtung (18) verbunden ist, um einen Sockelpegel des gewandelten Farbdifferenzsignals auf einen Bezugsspannungspegel zu setzen,
   eine zweite Pegelfestlegevorrichtung (B2,C2,D2,122), die mit der Demodulationsvorrichtung, die nicht wahlweise mit der ersten Wandlervorrichtung (18) verbunden wurde, zum Setzen eines Sockelpegels des Farbdifferenzsignals auf einen Referenzspannungspegel und eine Schaltervorrichtung (120), die ansprechbar auf ein Horizontal-Synchronisationssignal, das in dem ersten oder zweiten Videosignal enthalten ist mit der ersten und zweiten Pegelfestlegevorrichtung zur wahlweisen Ausgabe von Ausgabesignalen von der ersten und zweiten Pegelfestlegevorrichtung, verbunden ist.

3. Schaltung zur Verarbeitung eines Videosignals nach Anspruch 1, bei der
   entweder das erste oder das zweite Modulationssystem das PAL- bzw. das SECAM-System enthält, und in der das andere der ersten oder zeiten Modulationssysteme das SECAM- bzw. PAL-System enthält.

4. Schaltung zur Verarbeitung eines Videosignals nach Anspruch 1, bei der
   die erste und zweite Entnahmevorrichtung (10,12) Bandpassfilter sind, welche jeweils wahlweise den Durchgang einer Farbtonsignalkomponente erlauben.

5. Schaltung zur Verarbeitung eines Videosignals nach Anspruch 2, bei der
   die erste Pegelfestlegevorrichtung einen ersten Verstärker zur Pegelhaltung enthält, und die zweite Pegelfestlegeschaltung einen zweiten Verstärker zur Pegelhaltung enthält.

## Revendications

1. Circuit de traitement de signal vidéo (204) pouvant être relié à un moyen d'affichage d'image (205) comportant un écran destiné à afficher une image, ledit circuit de traitement de signal vidéo (204) appliquant, audit moyen d'affichage d'image, un signal vidéo composite destiné à afficher au moins des première et seconde images simultanément sur l'écran dudit moyen d'affichage d'image (205), et ledit écran dudit moyen d'affichage d'image comportant une première zone d'écran destinée à afficher la première image et une seconde zone d'écran destinée à afficher la seconde image, caractérisé par
   un premier moyen d'extraction (10) destiné à recevoir un signal vidéo modulé par un premier ou un second système de modulation en tant qu'entrée et destiné à extraire une composante de signal modulé de porteuse de différence de couleur à partir dudit signal vidéo,
   un premier moyen de démodulation (14) destiné à démoduler ladite composante de signal modulé de porteuse de différence de couleur obtenue à l'aide dudit premier moyen d'extraction (10) d'un système de démodulation correspondant à son système de modulation et destinée à appliquer le signal démodulé en tant que première sortie de démodulation,

un second moyen d'extraction (12) destiné à recevoir un signal vidéo modulé par ledit premier ou second système de modulation en tant qu'entrée et destiné à extraire une composante de signal modulé de porteuse de différence de couleur à partir dudit signal vidéo,

un second moyen de démodulation (16) destiné à démoduler ladite composante de signal modulé de porteuse de différence de couleur obtenue par ledit second moyen d'extraction (12) avec un système de démodulation correspondant à son système de modulation et destinée à appliquer le signal démodulé en tant que seconde sortie de démodulation,

un premier moyen de conversion (18) relié sélectivement auxdits premier ou second moyens de démodulation (14, 16) afin de compresser le signal de sortie démodulé obtenu à partir du moyen de démodulation relié afin de convertir le signal de sortie démodulé en un signal de différence de couleur qui peut être affiché dans ladite seconde zone d'écran plus petite que ladite première zone d'écran à l'intérieur de ladite première zone d'écran sur ledit écran dudit moyen d'affichage d'image (205),

un premier moyen d'insertion (110) destiné à insérer un signal de sortie dudit moyen de conversion (18) dans un signal de sortie du moyen de démodulation qui n'a pas été relié sélectivement audit premier moyen de conversion (18),

un premier moyen de séparation de signal de luminance (32) destiné à recevoir un signal vidéo modulé par un premier ou un second système de modulation en tant qu'entrée et destiné à extraire un signal de luminance du signal vidéo modulé par son système de modulation,

un second moyen de séparation de signal de luminance (34) destiné à recevoir un signal vidéo modulé par un premier ou un second système de modulation en tant qu'entrée et destiné à extraire un signal de luminance du signal vidéo modulé par son système de modulation,

un second moyen de conversion (36) relié sélectivement auxdits premier ou second moyens de séparation de signal de luminance (32, 34) afin de compresser le signal de luminance obtenu à partir du moyen de séparation relié pour convertir le signal de luminance en un signal de luminance qui puisse être affiché dans ladite seconde zone d'écran plus petite que ladite première zone d'écran à l'intérieur de ladite première zone d'écran sur ledit écran dudit moyen d'affichage d'image (205),

un second moyen d'insertion (113) destiné à insérer un signal de sortie dudit second moyen de conversion (36) dans un signal de sortie du moyen de séparation qui n'a pas été relié sélectivement audit second moyen de conversion (36),

un moyen de modulation (20, 24) relié audit premier moyen d'insertion (110), afin de moduler un signal de sortie synthétisé par ledit premier moyen d'insertion (110) en un signal de chrominance modulé, et

un moyen de mélangeur (30) afin de mélanger ledit signal de chrominance modulé avec le signal de sortie dudit second moyen d'insertion (113) en vue de sortir ledit signal vidéo composite.

2. Circuit de traitement de signal vidéo selon la revendication 1, dans lequel
ledit premier moyen d'insertion (110) comprend
une source de tension de référence (Vp),
un premier moyen d'établissement de niveau (B1, C1, D1, 121) relié audit premier moyen de conversion (18), destiné à établir un niveau de référence dudit signal de différence de couleur converti en un niveau de tension de référence,

un second moyen d'établissement de niveau (B2, C2, D2, 122) relié audit moyen de démodulation qui n'a pas été relié sélectivement audit premier moyen de conversion (18), destiné à établir un niveau de référence du signal de différence de couleur à un niveau de tension de référence, et

un moyen de commutation (120) relié auxdits premier et second moyens d'établissement de niveau, afin de sortir sélectivement des signaux de sortie desdits premier et second moyens d'établissement de niveau en réponse à un signal de synchronisation horizontal inclus dans ledit premier ou second signal vidéo.

3. Circuit de traitement de signal vidéo selon la revendication 1, dans lequel
l'un ou l'autre desdits premier et second systèmes de modulation comprennent soit l'un des systèmes PAL et SECAM et l'autre desdits premier et second systèmes de modulation comprend l'autre des systèmes PAL et SECAM.

4. Circuit de traitement de signal vidéo selon la revendication 1, dans lequel

lesdits premier et second moyens d'extraction (10, 12) sont des filtres passe-bande destinés chacun à permettre sélectivement le passage d'une composante de signal de chrominance.

5. Circuit de traitement de signal vidéo selon la revendication 2, dans lequel
ledit premier moyen d'établissement de niveau comprend un premier circuit de rétablissement de niveau, et ledit second moyen d'établissement de niveau comprend un second circuit de rétablissement de niveau.

# FIG.1A

# FIG.1B

# FIG.2

# FIG.3A

# FIG.3B

# FIG.3C

# FIG.4A

EP 0 334 351 B1

FIG.4B

FIG.4C

# FIG.5

MAIN/SUB SWITCHING (SELECTION OF MAIN) 50

Y/C SEPA EXCEPT. C 32

a 112
a 113
a

D.My 36
b
c
b 114

Y/C SEPA EXCEPT. C 34

a 115

OUT

b

MAIN/SUB INSERTION OUTPUT SWITCHING 58

56

MAIN/SUB INSERTION

Y/C MIX 30

MAIN/SUB SWITCHING (SELECTION OF SUB) 52

IN1

BPF 10

PAL/SECAM DECODER 14

PAL ENCODER 20

SIGNAL SYSTEM SELECTION

a

a

a

D.Mc 18

b 109

c 110

SECAM ENCODER 24

b 111

54

IN2

BPF 12

PAL/SECAM DECODER 16

19

EP 0 334 351 B1

# FIG.6A

# FIG.6B

MAIN/SUB SWITCHING (SELECTION OF MAIN) 50

Y/C SEPA EXCEPT.C 32

Y/C SEPA EXCEPT.C 34

a ○ 112

b

D.MY 36

a 113

b

c

a ○ 114

b

a ○ 115

b

OUT (SECAM)

MAIN/SUB INSERTION OUTPUT SWITCHING 58

EP 0 334 351 B1

21

MAIN/SUB INSERTION 56

MAIN/SUB SWITCHING (SELECTION OF SUB) 52

IN₁ (SECAM)

BPF 10

PAL/SECAM DECODER 14

Y/C MIX. 30

PAL ENCODER 20

SIGNAL SYSTEM SELECTION 54

a

b

c

a ○ 109

D.MC 18

a

b

c ○ 110

a

b 111

IN₂ (SECAM)

BPF 12

PAL/SECAM DECODER 16

SECAM ENCODER 24

# FIG.6C

MAIN / SUB SWITCHING (SELECTION OF MAIN) 50

Y / C SEPA EXCEPT.C 32

Y / C SEPA EXCEPT.C 34

D.MY 36

112

113

114

a 115

b

OUT(PAL)

MAIN / SUB INSERTION OUTPUT SWITCHING 58

Y / C MIX. 30

MAIN/SUB INSERTION 56

MAIN/SUB SWITCHING (SELECTION OF SUB) 52

IN1 (SECAM)

BPF 10

PAL / SECAM DECODER 14

IN2 (PAL)

BPF 12

PAL / SECAM DECODER 16

D.MC 18

109

110

PAL ENCODER 20

SECAM ENCODER 24

111

SIGNAL SYSTEM SELECTION 54

22

EP 0 334 351 B1

# FIG.7A

# FIG.7B